# EUROPÄISCHE PATENTSCHRIFT

(11) **EP 2 067 977 B1**
(45) Veröffentlichungstag und Bekanntmachung des Hinweises auf die Patenterteilung: **21.09.2011**
(21) Anmeldenummer: 08012808.5
(22) Anmeldetag: 16.07.2008
(51) Int. Cl.: F02M 25/07, F16K 11/052, F16K 11/16, F16K 31/04

(54) **Doppelventil für eine Einrichtung zur Abgasrückführung**
Double valve for a device for exhaust gas recirculation
Soupape double pour un dispositif de recirculation des gaz d'échappement

(30) Priorität: 06.12.2007 DE 102007058664
(43) Veröffentlichungstag der Anmeldung: 10.06.2009
(73) Patentinhaber: Gustav Wahler GmbH u. Co.KG, 73730 Esslingen (DE)
(72) Erfinder: Kasper, Klaus, 77704 Oberkirch (DE); Hofmann, Martin, 73728 Esslingen (DE); Bareis, Bernd, 73527 Utzstetten (DE)
(74) Vertreter: Kratzsch, Volkhard

(56) Entgegenhaltungen:
- EP-A1- 1 030 050
- EP-A2- 0 994 247
- WO-A1-00/06885
- WO-A1-2009/059999
- DE-A1- 2 515 194
- DE-A1- 19 934 113
- FR-A1- 2 900 455
- US-A- 4 512 372

## Beschreibung

Die Erfindung bezieht sich auf eine Abgasrückführeinrichtung mit einem Doppelventil mit den Merkmalen im Oberbegriff des Anspruchs 1.

Bei einer bekannten Abgasrückführeinrichtung dieser Art (FR 2 900 455 A1) weist das Doppelventil in einem Gehäuse innerhalb eines Strömungsweges ein erstes Ventilelement und innerhalb eines weiteren Strömungsweges ein zweites Ventilelement auf. Zum Antrieb dieser Ventilelemente ist ein Motor mit einem Motorritzel vorgesehen, der beiden Ventilelementen gemeinsam ist. Bei Antrieb in einer Antriebsrichtung kann das erste Ventilelement aus der Schließstellung heraus in seine Öffnungsstellung bewegt werden, während das zweite Ventilelement in Schließstellung verbleibt. Bei gegensinniger Antriebsrichtung kann das zweite Ventilelement aus der Schließstellung heraus in seine Öffnungsstellung bewegt werden, während das erste Ventilelement in seiner Schließstellung verbleibt. Jedes Ventilelement ist als Klappe ausgebildet, die über eine zugeordnete Welle schwenkbetätigbar ist. Die Wellen sind mittels der Antriebseinrichtung in Form des Motors mit Motorritzel unabhängig voneinander drehbetätigbar. Über ein Zahnrad, das drehfest mit der Welle des ersten Ventilelements ist, wird dieses erste Ventilelement zwischen zwei Anschlägen schwenkverstellt. Zwischen dem Zahnrad und der Welle befindet sich eine Feder. Das zweite Ventilelement wird mittelbar über den Getriebeeingriff mit dem Zahnrad betätigt, welches in Eingriff mit einem zweiten Zahnrad steht, welches drehbar ist. Die Welle des zweiten Ventilelements ist drehfest mit einer Brücke mit Anschlägen verbunden. Diese greifen in Bogenschlitze des zweiten Zahnrades ein. Dieses nimmt über die Bogenschlitze und die Brücke die Welle in der jeweiligen Drehrichtung mit, wodurch das zweite Ventilelement verstellt wird. Die Wellen der Ventilelemente sind im wesentlichen parallel zueinander drehbar angeordnet. Die beiden Ventilelemente haben die Form von Drehklappen, wobei deren Welle sich etwa in Richtung der Diametralen der Drehklappen erstreckt. Jede Welle ist in Längsrichtung geschlitzt und nimmt dazwischen die jeweilige Drehklappe auf. Die Drehklappen sind innerhalb jeweiliger zylindrischer Gehäuseteile angeordnet, durch die die Strömungskanäle definiert sind. Die Drehbetätigung der Drehklappen erfolgt um deren Diametrale. In der Schließstellung jeder Klappe steht diese mit der Klappenfläche quer zum zylindrischen Durchgang. In der Öffnungsstellung verläuft die Klappenfläche etwa in Längsrichtung des jeweiligen Strömungskanals oder mehr oder weniger schräg dazu. Die Schließstellung jeder Klappe erfordert ein gewisses Umfangsspiel zwischen der Umfangsfläche der Klappe und dem Inneren des zylindrischen Strömungskanals. Hierbei besteht die Gefahr, dass sich Schmutzpartikel od. dgl. ansammeln, die die Betätigung der Drehklappe stören. Diese Gefahr besteht auch dann, wenn die jeweilige Drehklappe in ihrer Schließstellung nicht völlig rechtwinklig zur Strömungsrichtung verläuft, sondern etwas schräg dazu gerichtet ist.

In der DE 25 15 194 A1 ist eine Absperrvorrichtung mit einem Doppelventil beschrieben, das zwei Klappen aufweist, die mit einem Ende über ein Scharnier schwenkbar angelenkt sind und um dieses Scharnier geschwenkt werden können. Die Klappen verlaufen dann, wenn sich beide in Schließstellung befinden, mit ihren Flächen etwa rechtwinklig zueinander. Etwa mittig jeder Klappe greift eine beiden Klappen gemeinsame Betätigungseinrichtung derart an, dass jeweils eine Klappe aus der Schließstellung heraus in ihre Öffnungsstellung bewegbar ist während die andere Klappe in Schließstellung verbleibt. Die Klappen sind weder drehbetätigbar noch im wesentlichen parallel zueinander drehbar angeordnet. Bei einem anderen Ausführungsbeispiel ist jede Klappe in Richtung etwa rechtwinklig zur Klappenfläche durch Verschieben vom Ventilsitz weg in Öffnungsstellung bzw. gegensinnig in Schließstellung bewegbar, ebenfalls mittels einer beiden gemeinsamen, von Hand bedienbaren Betätigungseinrichtung mit Gelenkstangen. In beiden Fällen befinden sich die Klappen in einem Gehäuse mit einer Eintrittsöffnung zum Gehäuseinneren und mit davon entfernten Austrittsöffnungen, die von den Klappen gegen die Anströmung des Mediums, das über die Eintrittsöffnung in das Innere des Gehäuses eintritt, freigegeben werden. Eine derartige Absperrvorrichtung ist ersichtlich nicht als Abgasrückführeinrichtung geeignet.

In der WO 2009/059999 A1 ist eine Ventileinrichtung zur Steuerung der Abgasrückführung beschrieben, die in Amphoren-Typ-Anordnung zwei Blätter aufweist, die an einem Ende zusammengeführt sind und schwenkbar an einem Stift angebracht sind, während das andere Ende jedes Blattes mittels eines horizontalen Schiebers mit Anschlägen derart verstellbar ist, dass entweder das eine Blatt oder das andere Blatt von einer Schließstellung eines Kanals in eine Öffnungsstellung überführt werden kann.

In der EP 0 994 247 A2 ist eine Abgasrückführeinrichtung mit einem Doppelventil beschrieben, welches zwei durch Schiebebewegung betätigbare Ventilelemente aufweist, die in Schließrichtung an einem zugeordneten Ventilsitz anliegen. Wird ein Ventilelement durch Horizontalverschiebung vom Ventilsitz entfernt unter Herbeiführung der Öffnungsstellung, bleibt das andere Ventilelement in Schließstellung.

In der EP 1 030 050 A1 ist eine Abgasrückführeinrichtung beschrieben, bei der ein einziges Umschaltventil oder eine einzige schwenkbare Klappe zum Umschalten der Strömung zwischen einem Kühler und einer Bypassleitung vorgesehen sind. Das Umschaltventil bzw. die Klappe kann eine erste Stellung einnehmen, in der z. B. der Durchgang durch den Kühler gesperrt und durch den Bypasskanal geöffnet ist. In einer anderen umgeschalteten Stellung sind die Verhältnisse derart umgekehrt, dass der Bypasskanal gesperrt und der Durchgang durch den Kühler geöffnet ist.

Aus der DE 199 34 113 A1 ist ein Klappenventil zum Steuern eines Gasstromes bekannt, das eine in einem schrägen Kanal angeordnete schräg gerichtete Drehklappe aufweist, die zwischen einer Schließ- und Offenstellung schwenkbar ist. Die Klappe sitzt zur Vermeidung von Wellendurchbrüchen in einem Ventilrohr innerhalb des Dichtbereichs zwischen der Ventilklappe und dem Ventilrohr und ist dort so ausgerichtet, dass die Achse der Klappenwelle mit der Achse des Ventilrohres einen spitzen Winkel einschließt. Die drehfest auf der Klappenwelle sitzende Ventilklappe ist dabei so ausgerichtet, dass in ihrer Schließstellung ihre Flächennormale mit der Achse des Ventilrohres fluchtet oder unter einem spitzen Winkel zu dieser verläuft.

Die eingangs beschriebene Abgasrückführeinrichtung mit einem Doppelventil ist aufwendig, voluminös und hinsichtlich der Funktion nicht zuverlässig.

Der Erfindung liegt die Aufgabe zugrunde, eine Abgasrückführeinrichtung der eingangs genannten Art zu schaffen, die einfach im Aufbau ist, einen reduzierten Platzbedarf hat und betriebssicher funktioniert.

Die Aufgabe ist bei einer Abgasrückführeinrichtung der eingangs genannten Art gemäß der Erfindung durch die Merkmale im Anspruch 1 gelöst. Weitere besondere Erfindungsmerkmale und Ausgestaltungen dazu ergeben sich aus den Unteransprüchen.

Die erfindungsgemäße Abgasrückführeinrichtung mit einem Doppelventil hat den Vorteil, dass jeweils nur Drehantriebsbewegungen und Drehbetätigungsbewegungen zur Aktivierung der beiden Ventilelemente erforderlich sind. Diese Einrichtung ist einer einfachen und guten Steuerung dergestalt zugänglich, dass jedes der beiden Ventilelemente zwischen seiner Schließstellung und seiner voll geöffneten Stellung verstellbar ist, ohne dass das jeweils andere Ventilelement aus einer Schließstellung heraus bewegt wird. Die Einrichtung ist aufgrund der besonderen Gestaltung betriebssicher. Die beiden Strömungswege des Doppelventils lassen sich einfach und platzsparend über entsprechende Anschlüsse an diese Strömungswege weiterführende Rohre, Kanäle od. dgl. anschließen. Vorteilhaft ist, dass die beiden inneren Strömungswege des Doppelventils je nach Bedarf in der einen oder in der dazu gegensinnigen Richtung vom Abgas durchströmt werden können. Auch ist hinsichtlich der Betriebsweise und des Anschlusses eine Vertauschung dergestalt möglich, dass z. B. der eine Strömungsweg, der ungekühltes Abgas als Bypass führt, statt dessen auch als solcher Strömungsweg dienen kann, der dem Abgaskühler zugeordnet ist, z. B. zu diesem hinführt oder gegensinnig dazu von dem vom Abgaskühler herkommenden Abgas durchströmbar ist.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommene.

Die Erfindung ist nachfolgend anhand von in den Zeichnungen gezeigten Ausführungsbeispielen näher erläutert. Es zeigen:
- Fig. 1: eine schematische perspektivische Ansicht eines Doppelventils für eine Einrichtung zur Abgasrückführung, gemäß einem ersten Ausführungsbeispiel, mit Blick auf die Eintrittsöffnung für Abgas,
- Fig. 2: eine schematische perspektivische Ansicht ähnlich derjenigen in Fig. 1, jedoch mit Blick auf die Austrittsöffnungen für Abgas,
- Fig. 3: einen schematischen Schnitt eines Teiles eines der beiden Ventile,
- Fig. 4: eine schematischen perspektivische Ansicht des Getriebes des Doppelventils,
- Fig. 5: eine schematische perspektivische Ansicht eines nicht erfindungsgemäßen Doppelventils für eine Einrichtung zur Abgasrückführung,
- Fig. 6: einen schematischen Schnitt eines Ventiles des Doppelventils in Fig. 5,
- Fig. 7: eine Seitenansicht des Getriebes des Doppelventils in Fig. 5.

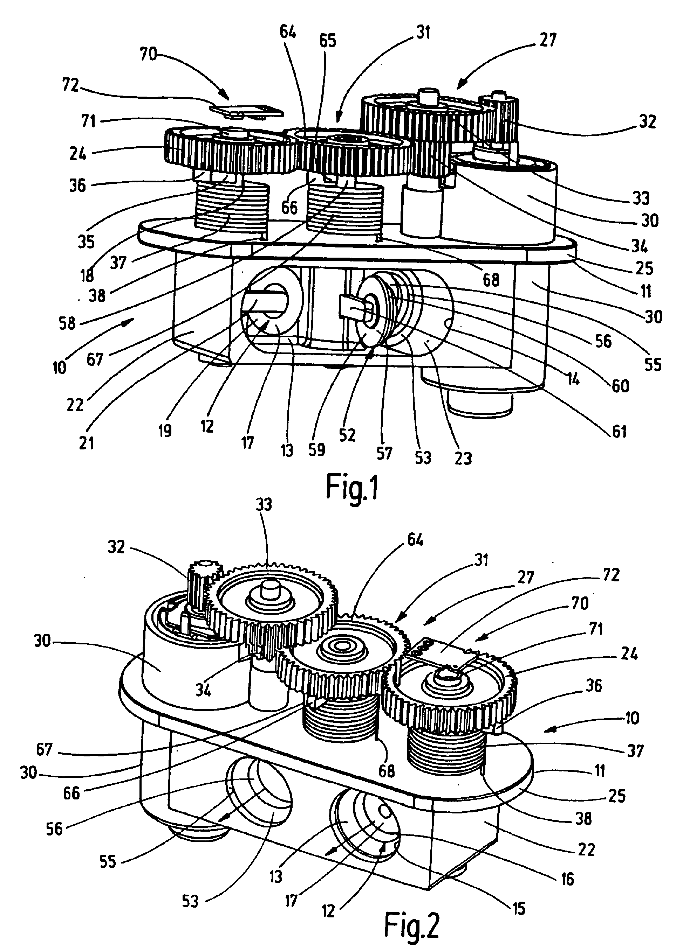

In Fig. 1 bis 4 ist ein erstes Ausführungsbeispiel eines Doppelventils 10 für eine ansonsten nicht weiter dargestellte Einrichtung zur Abgasrückführung gezeigt. Generell ist eine derartige Abgasrückführungseinrichtung so gestaltet, dass zwischen einer von einer Brennkraftmaschine kommenden Abgasleitung und einer zur Brennkraftmaschine führenden Zuluftleitung zwei Strömungswege vorgesehen sind, über die von der Abgasleitung abgezweigtes Abgas zu der Zuluftleitung geführt wird und damit zurückgeführt wird. Einer dieser Strömungswege enthält einen Wärmeaustauscher zur Abgaskühlung, somit einen Abgaskühler. Der andere Strömungsweg stellt einen Bypass dar und führt das Abgas direkt unter Umgehung des Abgaskühlers, also ungekühlt, zu der Zuluftleitung.

Das Doppelventil 10 ist so gestaltet, dass dieses entweder beide Strömungswege absperren kann oder den Betriebsbedingungen entsprechend den einen Strömungsweg oder den anderen Strömungsweg freigeben kann, um entweder gekühltes Abgas über den Abgaskühler oder ungekühltes Abgas über den Bypass der Zuluftleitung der Brennkraftmaschine zuzuführen und dort mit der Frischluft zu mischen.

Das Doppelventil 10 enthält in einem allgemein mit 11 bezeichneten Gehäuse ein erstes Ventilelement 12 in einem ersten, zum Abgaskühler führenden Strömungsweg 13. Die Strömungsrichtung kann auch gegensinnig verlaufen. Ferner enthält das Doppelventil 10 im Gehäuse 11 ein zweites Ventilelement 52 in einem zweiten Strömungsweg 53 ohne Abgaskühler, der somit einen kurzschließenden Bypass bildet. Die Anordnung ist dabei so getroffen, dass jedes Ventilelement 12, 52 zwischen seiner Schließstellung, die in Fig. 1 und 2 für das erste Ventilelement 12 gezeigt ist, und seiner voll geöffneten Öffnungsstellung, wie eine solche in Fig. 1 und 2 für das zweite Ventilelement 52 gezeigt ist, verstellbar ist, ohne dass das jeweils andere Ventilelement dabei aus seiner Schließstellung herausbewegt wird. Die im Gehäuse 11 gebildeten Strömungswege 13 und 53 weisen beim ersten Ausführungsbeispiel eine beiden gemeinsame Eintrittsöffnung 14 sowie je Strömungsweg 13 bzw. 53 eine Austrittsöffnung 15 bzw. 55 für das Abgas auf, die z. B. etwa kreisförmig sind. Die Austrittsöffnungen 15 bzw. 55 haben jeweilige Ventilflächen 16 bzw. 56 als Sitzflächen, wobei das erste Ventilelement 12 der ersten Austrittsöffnung 15 und das zweite Ventilelement 52 der zweiten Austrittsöffnung 55 zur Steuerung dieser zugeordnet ist.

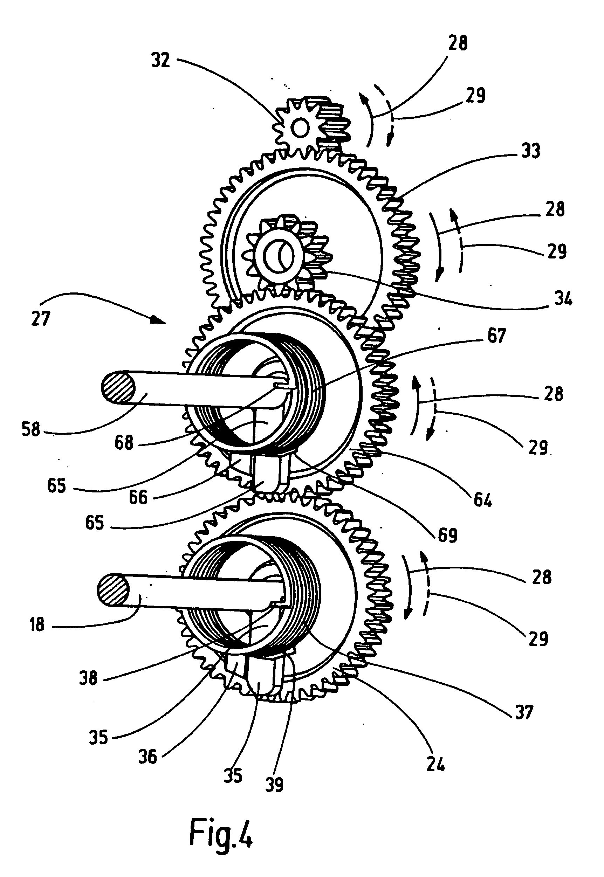

Das Doppelventil 10 ist mit einer beiden Ventilelementen 12, 52 gemeinsamen Antriebseinrichtung 27 zum Antrieb der Ventilelemente 12, 52 derart versehen, dass in Abhängigkeit von der Antriebsrichtung gemäß dem durchgezogenen Pfeil 28 bzw. gestricheltem Pfeil 29 in Fig. 4 nur jeweils eines der Ventilelemente 12, 52 aus der Schließstellung heraus in seine Öffnungsstellung bewegbar ist, während das andere der Ventilelemente 12, 52 in seiner Schließstellung verbleibt.

Das erste Ventilelement 12 ist im ersten Strömungsweg 13 angeordnet, der mit dem nicht weiter gezeigten Abgaskühler in Verbindung steht. Das zweite Ventilelement 52 ist im zweiten Strömungsweg 53 angeordnet, über den im Bypass ungekühltes Abgas von der Abgasleitung zurück zur Zuluftleitung geführt wird. Es versteht sich, dass die Verhältnisse der Strömungswege 13, 53 auch vertauscht sein können, d. h. der zweite Strömungsweg 53 mit dem Abgaskühler verbunden sein und der erste Strömungsweg 13 den Bypass bilden kann.

Jedes Ventilelement 12, 52 ist als Klappe 17, 57 ausgebildet, die über eine zugeordnete Welle 18 bzw. 58 schwenkbetätigbar ist. Die beiden Wellen 18, 58 sind zumindest im wesentlichen parallel zueinander mit Querabstand voneinander und dabei drehbar angeordnet. Sie sind mittels der gemeinsamen Antriebseinrichtung 27 voneinander unabhängig drehbetätigbar, und zwar allein in Öffnungsstellung und dies dabei entgegen oder statt dessen mit der Richtung des im Strömungsweg 13 bzw. 53 geführten Abgases. Die Ventilelemente 12 und 52, insbesondere Klappen 17 bzw. 57, sind nebeneinander und mit Abstand voneinander angeordnet. Dabei ist jedes Ventilelement 12 bzw. 52, insbesondere jede Klappe 17 bzw. 57, als etwa kreisförmiger Klappdeckel 19 bzw. 59 ausgebildet, der in Schließstellung mit einer Ringfläche an der zugeordneten gehäuseseitigen Ventilfläche 16 bzw. 56 anliegt. Diese Ringfläche 60 ist nur in Fig. 1 für den Klappdeckel 59 sichtbar. Jede Klappe 17 bzw. 57 ist mit ihrer zugeordneten Welle 18 bzw. 58 über einen quer gerichteten Hebel 21 bzw. 61 verbunden. Die jeweilige Welle 18 bzw. 58 verläuft in seitlichem Abstand von der jeweiligen Klappe 17 bzw. 57, derart, dass unter Drehung der Welle 18 oder 58 die jeweilige Klappe 17 oder 57 über den Hebel 21 bzw. 61 an die Austrittsöffnung 15 bzw. 55 heran in Schließposition geschwenkt wird oder bei Aktivieren der Antriebseinrichtung 27 über die gleichen Mittel gegensinnig gegen die Wirkung einer Feder und gegen die Wirkung des Abgasdruckes in die Öffnungsstellung geschwenkt wird.

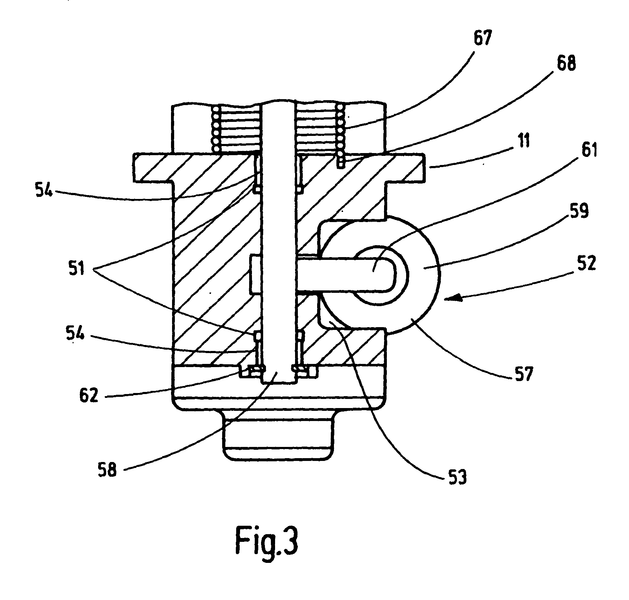

Die Welle 18, 58 jedes Ventilelements 12, 52 ist, wie Fig. 3 für die Welle 58 zeigt, im Gehäuse 11 mittels Lagern 54, bzw. Nadellagern, drehbar gelagert und mittels Dichtungen 51 in Bezug auf den Strömungsweg 53 des Abgases abgedichtet. Mittels eines Sicherungsringes 62 ist die Welle 58 axial gesichert.

Das Gehäuse 11 weist einen etwa rechteckförmigen Gehäuseteil 22 auf, der eine Kammer 23 enthält, die einerseits mit der Eintrittsöffnung 14 und andererseits mit den beiden Austrittsöffnungen 15, 55 in Verbindung steht und sowohl den ersten Strömungsweg 13, der von der Eintrittsöffnung 14 über die vom ersten Ventilelement 12 gesteuerte Ventilfläche 16 zur zugeordneten Austrittsöffnung 15 verläuft, als auch den anderen zweiten Strömungsweg 53 enthält, der von der Eintrittsöffnung 14 über die von dem zweiten Ventilelement 52 gesteuerte Ventilfläche 56 zur zugeordneten Austrittsöffnung 55 verläuft. Die beiden Austrittsöffnungen 15, 55 sind an einer Seite des Gehäuseteils 22 nebeneinander angeordnet. Die beiden Strömungswegen 13, 53 gemeinsame Eintrittsöffnung 14, die etwa die Form eines rechteckförmigen Fensters hat, ist an der anderen, gegenüberliegenden Seite des Gehäuseteils 22 angeordnet.

Nachstehend sind Einzelheiten der gemeinsamen Antriebseinrichtung 27 erläutert. Diese weist einen den Ventilelementen 12 und 52 gemeinsamen, hinsichtlich seiner Antriebsrichtung umsteuerbaren Drehantrieb 30 auf. Dieser kann aus einem Gleichstrommotor gebildet sein, z. B. einem Servomotor, Schrittmotor od. dgl.. Die Antriebseinrichtung 27 weist ferner ein Getriebe 31 auf, mit dem der Drehantrieb 30 in Antriebsverbindung steht. Im einzelnen ist je Ventilelement 12 und 52 ein Antriebsrad 24 bzw. 64 vorgesehen, die z. B. als Zahnräder, vorzugsweise als Stirnräder, ausgebildet sind. Die beiden Antriebsräder 64 und 24 stehen getrieblich miteinander in Eingriff. Sie sind auf einer Seite des Gehäuses 11 auf einer gemeinsamen Gehäuseplatte 25 nebeneinander angeordnet. Das erste Antriebsrad 24 wird vom zweiten Antriebsrad 64 angetrieben. Der Drehantrieb 30 weist ein motorseitiges Abtriebsrad 32, z. B. in Form eines Zahnritzels, auf, das ein daneben befindliches Zwischenrad 33 antreibt, mit dem drehfest ein Stufenrad 34 zur Getriebeuntersetzung verbunden ist. Auch diese können als Zahnräder, vorzugsweise als Stirnräder, ausgebildet sein, wie dargestellt. Der Räderblock aus Zwischenrad 33 und damit drehfestem Stufenrad 34 ist für sich frei drehbar an der Gehäuseplatte 25 und/oder im Gehäuseteil 22 gelagert. Über das Stufenrad 34 wird das damit kämmende zweite Antriebsrad 64 für das zweite Ventilelement 52 angetrieben, wobei das zweite Antriebsrad 64 seinerseits das damit in Eingriff stehende erste Antriebsrad 24 antreibt.

Beide Antriebsräder 24 und 64 sind relativ zur jeweiligen zugeordneten Welle 18 bzw. 58 drehbar und zur Drehmitnahme dieser in Ventilöffnungsrichtung lediglich gekuppelt. Zur Kupplung dient einerseits je Antriebsrad 24 bzw. 64 ein zur Welle 18 bzw. 58 quer gerichteter und mit dieser drehfest verbundener Hebel 35 bzw. 65 und andererseits ein jeweils zugeordneter Mitnehmer 36 bzw. 66, der am jeweiligen Antriebsrad 24 bzw. 64 befestigt ist, also mit diesem umläuft, und dabei radial an einer solchen Stelle plaziert ist, dass der Mitnehmer 36, 66 am jeweiligen Endabschnitt des Hebels 35 bzw. 65 in einer Drehrichtung je Antriebsrad 24 bzw. 64 anschlagen kann. Wird über den Drehantrieb 30 das Abtriebsrad 32 in Richtung des durchgezogenen Pfeiles 28 angetrieben, so wird der Räderblock 33, 34 in dazu gegensinniger Richtung angetrieben, wodurch das zweite Antriebsrad 64 in Fig. 4 im Gegenuhrzeigersinn und von diesem das erste Antriebsrad 24 im Uhrzeigersinn angetrieben wird. Bei dieser Umlaufdrehung des zweiten Antriebsrades 64 in dieser einen Drehrichtung gemäß Pfeil 28 trifft der Mitnehmer 66 bei der Umlaufdrehung auf den Hebel 65, wodurch dieser und darüber die Welle 58 gedreht werden. Dadurch wird das zweite Ventilelement 52 aus seiner Schließstellung in die Öffnungsstellung geschwenkt.

Das vom zweiten Antriebsrad 64 im Uhrzeigersinn gemäß Fig. 4 angetriebene erste Antriebsrad 24 läuft dabei derart im Uhrzeigersinn um, dass sich der Mitnehmer 36 vom Hebel 35 entfernt. Der Hebel 35 mit Welle 18 und das zugeordnete erste Ventilelement 12 werden somit nicht angetrieben. Das Ventilelement 12 verbleibt in Schließstellung. Bei der Antriebsbetätigung in Pfeilrichtung 28 wird somit das zweite Ventilelement 52 aus seiner Schließstellung heraus in seine voll geöffnete Öffnungsstellung bewegt, ohne dass dabei das erste Ventilelement 12 aus seiner Schließstellung heraus bewegt wird.

Wird vom Drehantrieb 30 über das Ritzel 32 der Räderblock 33, 34 in Richtung des gestrichelten Pfeiles 29 in Fig. 4 angetrieben, so wird das zweite Antriebsrad 64 in Figur 4 im Uhrzeigersinn und das erste Antriebsrad 24 in Fig. 4 im Gegenuhrzeigersinn angetrieben. Der Umlauf des zweiten Antriebsrades 64 im Uhrzeigersinn gemäß Pfeil 29 führt dazu, dass der Mitnehmer 66 sich vom Hebel 65 wegbewegt im Uhrzeigersinn, so dass die zweite Welle 58 und das zweite Ventilelement 52 nicht angetrieben werden. Letzteres verbleibt somit in seiner Schließstellung. Das vom Antriebsrad 64 angetriebene erste Antriebsrad 24 wird gemäß dem Pfeil 29 in Fig. 4 im Gegenuhrzeigersinn angetrieben. Dabei trifft der Mitnehmer 36 auf den Hebel 35 der Welle 18, die mitsamt dem damit drehfesten Ventilelement 12 gedreht wird. Das Ventilelement 12 wird dadurch aus seiner Schließstellung in die voll geöffnete Öffnungsstellung bewegt, wobei hingegen das zweite Ventilelement 52 in seiner Schließstellung verbleibt.

Die Antriebseinrichtung 27 weist je Antriebsrad 24 und 64 ein jeweiliges Federelement 37 bzw. 67, z. B. eine Drehfeder, auf. Jedes Federelement 37 und 67 dient dazu, das jeweilige zugeordnete Ventilelement 12 bzw. 52 in dessen Schließstellung zu bringen und durch Federkraft in Schließstellung zu halten. Die Schließwirkung wird dabei durch den in Schließrichtung wirkenden Druck des geführten Abgases erhöht.

Jedes Federelement 37 bzw. 67 ist einerseits am Gehäuse 11, z. B. der Gehäuseplatte 25, fixiert. Dies ist in den Zeichnungen durch ein Federende 38 bzw. 68, das an der Gehäuseplatte 25 gehalten ist, verdeutlicht. Ferner ist jedes Federelement 37 bzw. 67 andererseits mit der zugeordneten Welle 18 bzw. 58 verbunden. Dies ist durch ein anderes Federende 39 bzw. 69 angedeutet, das z. B. am Hebel 35 bzw. 65 angreift, derart, dass das Federelement 37 bzw. 67 bei dem Drehantrieb der jeweiligen Welle 18 bzw. 58 mit Ventilelement 12 bzw. 52 in Ventilöffnungsrichtung mittels des jeweiligen Antriebsrades 24 bzw. 64 unter Federspannung gesetzt wird und bei Abfall des Drehantriebes die jeweilige Welle 18 bzw. 58 mit Ventilelement 12 bzw. 52 unter Entspannung in die jeweilige Ventilschließstellung zurück dreht. Wird z. B. durch Drehung in Pfeilrichtung 28 durch das zweite Antriebsrad 64 die Welle 58 und das zweite Ventilelement 52 aus der Schließstellung in die Öffnungsstellung bewegt, nimmt der Hebel 65 das Federende 69 mit, wodurch das Federelement 67 unter Federspannung gesetzt wird. Wird der Drehantrieb 30 z. B. stromlos gestellt, um das zweite Ventilelement 52 wieder in Schließstellung zu bringen, kann sich das Federelement 67 entspannen und über das Federende 69 den Hebel 65 und den Mitnehmer 66 sowie das Antriebsrad 64 gegensinnig zum Pfeil 28 in die in Fig. 4 gezeigte Ausgangsstellung zurückdrehen, in der das Ventilelement 52 wieder in Schließstellung steht. In analoger Weise ist das erste Federelement 37 wirksam.

Aus Fig. 1 und 2 ist ersichtlich, dass zumindest einer der Wellen 18, 58, insbesondere dem dieser zugeordneten Antriebsrad 24 bzw. 64, ein Drehwinkelgeber 70 zugeordnet ist. In vorteilhafter Weise ist der Drehwinkelgeber 70 dem in der Antriebsfolge des Getriebes 31 letzten Antriebsrad, insbesondere dem ersten Antriebsrad 24, zugeordnet. Dadurch werden etwaige Fehlfunktionen in der Getriebefolge bis hin zum letzten Antriebsrad 24 sensiert. Der Drehwinkelgeber 70 weist ein Geberelement 71, z. B. einen Magneten, am ersten Antriebsrad 24 und eine dem Geberelement 71 zugeordnete, schematisch angedeutete Sensorik 72 auf, die mit dem Gehäuse 11 in geeigneter Weise verbunden ist. Als Drehwinkelgeber 70 eignen sich vielfältige, dem Fachmann bekannte Elemente, z. B. Hall-Sensoren od. dgl.. Mittels des Drehwinkelgebers 70 werden die jeweiligen Winkelpositionen der Ventilelemente 12 bzw. 52 erfasst und einer nicht weiter gezeigten Steuereinrichtung gemeldet.

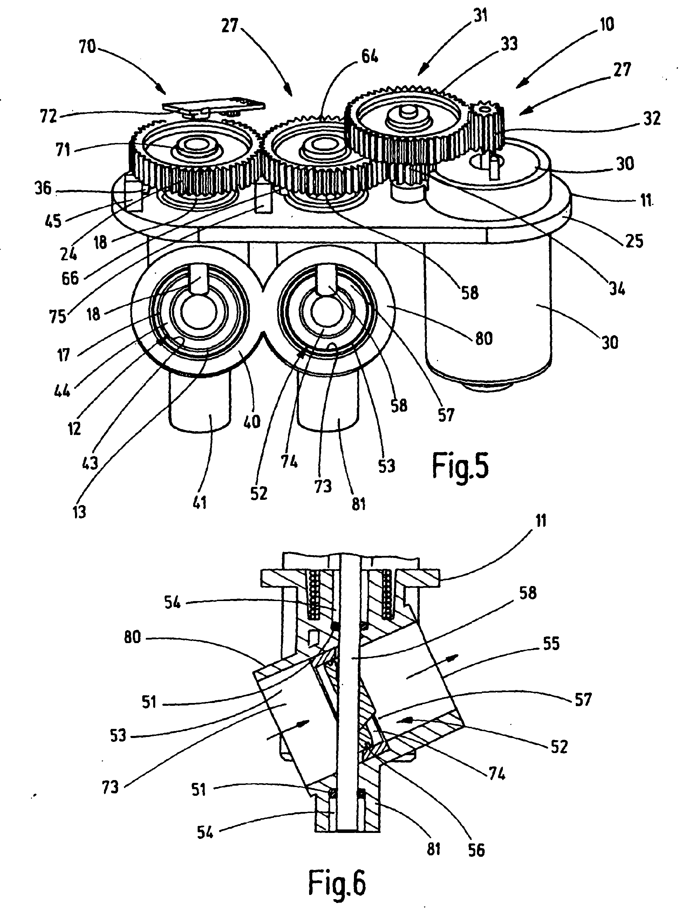

Bei dem in Fig. 5 bis 7 gezeigten nicht erfindungsgemäßen Doppelventils sind für die Teile, die dem ersten Ausführungsbeispiel entsprechen, die gleichen Bezugszeichen, soweit zur Erläuterung nötig, verwendet, wobei im übrigen die vorstehende Beschreibung auch für diese Ausführung gilt.

Abweichend vom ersten Ausführungsbeispiel weist das Gehäuse 11 zwei voneinander unabhängige Eintrittsöffnungen 43 bzw. 73 auf, die jeweils Teil des Strömungsweges 13 bzw. 53 sind und denen jeweils eine Austrittsöffnung 15 bzw. 55 zugeordnet ist.

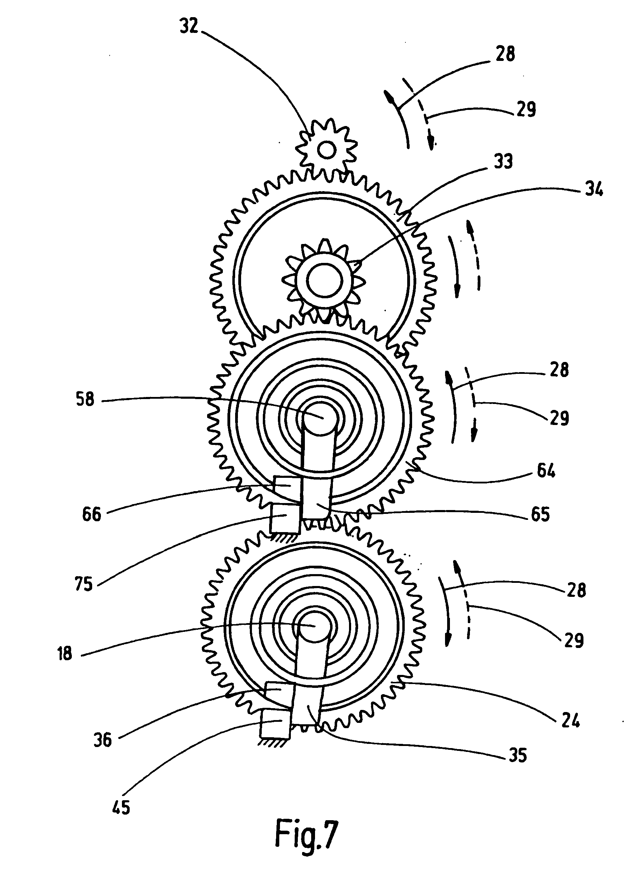

Jedes Ventilelement 12 und 52 ist hier als Drehklappe 44 bzw. 74 ausgebildet, die in Bezug auf die Achse ihrer jeweiligen Welle 18 bzw. 58 schräg gerichtet ist und innerhalb einer rohrförmigen Ventilsitzfläche 16 bzw. 56 im Gehäuse 11 um die Achse der Welle 18 bzw. 58 drehbar ist. Dem Hebel 35 bzw. 65 (Fig. 7) der jeweiligen Welle 18 bzw. 58 ist ein gehäusefester Anschlag 45 bzw. 75 zugeordnet, an dem der Hebel 35 bzw. 65 in der Drehrichtung, die der Antriebsdrehrichtung der jeweiligen Welle 18 bzw. 58 in Ventilöffnungsrichtung entgegengerichtet ist, unter Drehwinkelbegrenzung in Ventilschließstellung anschlagen kann, vorzugsweise unter der Wirkung einer Rückstellfeder, die wie das jeweilige Federelement 37, 67 beim ersten Ausführungsbeispiel zugleich auch als failsafe-Feder dient.

Das Gehäuse 11 weist je Strömungsweg 13 und 53 einen Rohrabschnitt 40 bzw. 80 auf, der - wie insbesondere Fig. 6 für den zweiten Rohrabschnitt 80 zeigt - an einem Ende eine Eintrittsöffnung 73 des jeweiligen Strömungsweges 53 und am anderen Ende eine Austrittsöffnung 55 des jeweiligen Strömungsweges und zwischen diesen die jeweilige rohrförmige Ventilsitzfläche 56 aufweist, innerhalb der in Fig. 6 die zweite Drehklappe 74 drehbar ist. In gleicher Weise ist die Anordnung auch beim ersten Ventilelement 12 und dessen Rohrabschnitt 40 getroffen.

Die beiden Rohrabschnitte 40 und 80 können im Bereich der jeweiligen Eintrittsöffnung 43, 73 und/oder Austrittsöffnung 15, 55 verbunden sein, z. B. miteinander einstückig sein. Die jeweiligen Wellen 18 und 58 sind jeweils in einem etwa in Längsrichtung der Wellen 18, 58 verlaufenden Rohrgehäusen 41 bzw. 81 gelagert, und zwar, wie Fig. 6 zeigt, mittels Lagern 54, die z. B. als Radiallager ausgebildet sind, wobei mittels Dichtungen 51 eine Abdichtung in Bezug auf den jeweiligen Strömungsweg, in Fig. 6 in Bezug auf den zweiten Strömungsweg 53, erfolgt. Wie anhand von Fig. 6 für den zweiten Rohrabschnitt 80 verdeutlicht ist, verläuft der jeweilige Rohrabschnitt 40, 80 in Bezug auf den Verlauf der Achse der Welle 18 bzw. 58 unter einem Winkel schräg, der von 90° abweicht. Die jeweilige Drehklappe 44 bzw. 74 erstreckt sich zumindest in ihrer Schließstellung innerhalb einer Ebene, die etwa rechtwinklig zur Achse des jeweiligen Rohrabschnitts 40 bzw. 80 verläuft.

Auch beim nicht erfindungsgemäßen Doppelventils 10 kann jedes Ventilelement 12, 52 zwischen seiner Schließstellung und seiner voll geöffneten Stellung verstellt werden, ohne dass das jeweils andere Ventilelement aus seiner Schließstellung heraus bewegt wird. Die Funktionsweise der Antriebseinrichtung 27 mit Getriebe 31 ist die gleiche, wie beim ersten Ausführungsbeispiel insbesondere anhand von Fig. 4 beschrieben ist. Die Schließstellung des jeweiligen Ventilelements 12 bzw. 52 wird dadurch sichergestellt, dass in dieser der Hebel 35 bzw. 65 an dem gehäusefesten zugeordneten Anschlag 45 bzw. 75 anschlägt und dadurch keine Drehung der Welle 18 bzw. 58 mit Ventilelement 12 bzw. 52 über die Schließstellung hinaus erfolgen kann. Auch beim nicht erfindungsgemäßen Doppelventil kann das jeweilige Ventilelement 12 bzw. 52 mittels eines Federelements in der Schließstellung gehalten sein bzw. in diese zurück überführt werden.

## Patentansprüche

1. Abgasrückführeinrichtung mit einem Doppelventil, das in einem Gehäuse (11) ein erstes Ventilelement (12) in einem Strömungsweg (13) zu einem Abgaskühler und ein zweites Ventilelement (52) in einem Strömungsweg (53) ohne Abgaskühler enthält und das mit einer beiden Ventilelementen (12, 52) gemeinsamen Antriebseinrichtung (27) zum Antrieb der Ventilelemente (12, 52) derart versehen ist, dass bei Antrieb in einer Antriebsrichtung das erste Ventilelement (12) aus der Schließstellung heraus in seine Öffnungsstellung bewegbar ist, während das zweite Ventilelement (52) in seiner Schließstellung verbleibt, und dass bei Antrieb in gegensinniger Antriebsrichtung das zweite Ventilelement (52) aus der Schließstellung heraus in seine Öffnungsstellung bewegbar ist, während das erste Ventilelement (12) in seiner Schließstellung verbleibt, wobei jedes Ventilelement (12, 52) als über eine zugeordnete Welle (18, 58) schwenkbetätigbare Klappe (17, 57) ausgebildet ist und die Wellen (18, 58) mittels der gemeinsamen Antriebseinrichtung (27) voneinander unabhängig drehbetätigbar und zumindest im wesentlichen parallel zueinander drehbar angeordnet sind und die Antriebseinrichtung (27) für jedes Ventilelement (12, 52) ein Antriebsrad (24, 64) aufweist und die beiden Antriebsräder (24, 64) getrieblich miteinander in Eingriff stehen,
**dadurch gekennzeichnet,**
**dass** jedes Ventilelement (12, 52) als mittels der jeweiligen Welle (18, 58) und über einen mit der Welle (18, 58) verbundenen quer gerichteten Hebel (21, 61) um eine seitlich beabstandete Wellenachse betätigbarer, z. B. etwa kreisförmiger, Klappdeckel (19, 59) ausgebildet ist, der in der Schließstellung mit einer Ringfläche (60) an einer gehäuseseitigen Ventilsitzfläche (16, 56) anliegt, und dass die beiden Antriebsräder, (24, 64) relativ zur jeweiligen Welle (18, 58) drehbar sind und jeweils einen daran festen Mitnehmer (36, 66) aufweisen, der bei einer Umlaufdrehung des jeweiligen Antriebsrades (24, 64) in einer Drehrichtung an einem quer gerichteten, mit der zugeordneten Welle (18, 58) verbundenen weiteren Hebel (35, 65) anschlagen und über diesen weiteren Hebel (35, 65) die Welle (18, 58) in dieser Drehrichtung antreiben kann und der bei dazu gegensinniger Umlaufdrehung des jeweiligen Antriebsrades (24, 64) den weiteren Hebel (35, 65) freigibt und nicht beaufschlagt.

2. Abgasrückführeinrichtung nach Anspruch 1,
**dadurch gekennzeichnet,**
**dass** das Gehäuse (11) eine Eintrittsöffnung (14) oder zwei unabhängige Eintrittsöffnungen (53, 73) für das Abgas und zwei Austrittsöffnungen (15, 55) für das Abgas mit jeweils zugeordneten Ventilflächen (16, 56) aufweist, wobei das erste Ventilelement (12) der ersten Austrittsöffnung (15) und das zweite Ventilelement (52) der zweiten Austrittsöffnung (55) zur Steuerung dieser zugeordnet ist.

3. Abgasrückführeinrichtung nach einem der Ansprüche 1 oder 2,
**dadurch gekennzeichnet,**
**dass** die Welle (18, 58) jedes Ventilelements (12, 52) im Gehäuse (11) mittels Lagern (54), z. B. Nadellagern, Radiallagern od. dgl., drehbar gelagert ist und in Bezug auf den jeweiligen Strömungsweg (13, 53) des Abgases abgedichtet ist.

4. Abgasrückführeinrichtung nach einem der Ansprüche 1 bis 3,
**dadurch gekennzeichnet,**
**dass** jedes Ventilelement (12, 52) aus seiner Schließstellung heraus gegen das in die Eintrittsöffnung (14) eingeleitete Abgas oder gegensinnig gerichtete Abgas in seine Öffnungsstellung bewegbar ist.

5. Abgasrückführeinrichtung nach Anspruch 1,
**dadurch gekennzeichnet,**
**dass** die beiden Antriebsräder (24, 64) auf einer Seite des Gehäuses (11) und nebeneinander angeordnet sind.

6. Abgasrückführeinrichtung nach einem der Ansprüche 1 bis 5,
**dadurch gekennzeichnet,**
**dass** die Antriebseinrichtung (27) ein Abtriebsrad (32), z. B. ein Zahnritzel, aufweist, das über ein benachbartes Zwischenrad (33), vorzugsweise mit Stufenrad (34), das zweite Antriebsrad (64) für das zweite Ventilelement (52) antreibt und dass das erste Antriebsrad (24) für das erste Ventilelement (12) mit dem zweiten Antriebsrad (64) in Eingriff steht und über dieses angetrieben wird.

7. Abgasrückführventil nach Anspruch 6,
**dadurch gekennzeichnet,**
**dass** das Abtriebsrad (32), das Zwischenrad (33), vorzugsweise mit Stufenrad (34), und die beiden Antriebsräder (24, 64) als Zahnräder, vorzugsweise als Stirnräder, ausgebildet sind.

8. Abgasrückführeinrichtung nach einem der Ansprüche 1 bis 7,
**dadurch gekennzeichnet,**
**dass** die Antriebseinrichtung (27) je Antriebsrad (24, 64) ein Federelement (37, 67), z. B. eine Drehfeder, aufweist, das einerseits am Gehäuse (11) fixiert ist, z. B. mit einem Federende (38, 68), und das andererseits mit der Welle (18, 58) verbunden ist, z. B. an deren weiteren Hebel (35, 65) angreift, beispielsweise mit einem Federende (39, 69), derart, dass das Federelement (37, 67) bei dem Drehantrieb der jeweiligen Welle (18, 58) mit Ventilelement (12, 52) in Ventilöffnungsrichtung mittels des jeweiligen Antriebsrades (24, 64) unter Federspannung gesetzt wird und bei Abfall des Drehantriebes die jeweilige Welle (18, 58) mit deren Ventilelement (12, 52) unter Federentspannung in die Ventilschließstellung zurückdreht.

9. Abgasrückführeinrichtung nach einem der Ansprüche 1 bis 8,
**dadurch gekennzeichnet,**
**dass** zumindest einer der Wellen (18, 58), insbesondere dem dieser zugeordneten Antriebsrad (24, 64), ein Drehwinkelgeber (70) zugeordnet ist.

10. Abgasrückführeinrichtung nach Anspruch 9,
**dadurch gekennzeichnet,**
**dass** der Drehwinkelgeber (70) dem in der Antriebsfolge letzten Antriebsrad, insbesondere dem ersten Antriebsrad (24), zugeordnet ist.

11. Abgasrückführeinrichtung nach Anspruch 9 oder 10,
**dadurch gekennzeichnet,**
**dass** der Drehwinkelgeber (70) ein Geberelement (71), z. B. einen Magneten, am Antriebsrad (24) und eine dem Geberelement (71) zugeordnete, mit dem Gehäuse (11) verbundene Sensorik (72) aufweist.

12. Abgasrückführeinrichtung nach Anspruch 1,
**dadurch gekennzeichnet,**
**dass** dem weiteren Hebel (35, 65) der jeweiligen Welle (18,58) ein gehäusefester Anschlag (45, 75) zugeordnet ist, an dem der weiteren Hebel (35, 65) in der Drehrichtung, die der Antriebsdrehrichtung der jeweiligen Welle (18, 58) in Ventilöffnungsrichtung entgegengerichtet ist, unter Drehwinkelbegrenzung in der Ventilschließstellung anschlagen kann, vorzugsweise unter der Wirkung einer Rückstellfeder.

13. Abgasrückführeinrichtung nach einem der Ansprüche 1 bis 12,
**dadurch gekennzeichnet,**
**dass** die Antriebseinrichtung (27), insbesondere die in der Antriebsfolge hintereinander folgenden Getrieberäder in Form des Zwischenrades (33), vorzugsweise mit damit festem Stufenrad (34), des zweiten Antriebsrades (64) und des folgenden ersten Antriebsrades (24) auf einer gemeinsamen Gehäuseplatte (25) angeordnet sind.

## Claims

1. Exhaust-gas recirculation device having a double valve which, in a housing (11), comprises a first valve element (12) in a flow path (13) to an exhaust-gas cooler and a second valve element (52) in a flow path (53) without an exhaust-gas cooler, and which is provided with a drive device (27), which is common to both valve elements (12, 52) and which serves for driving the valve elements (12, 52), in such a way that, when drive is imparted in one drive direction, the first valve element (12) can be moved out of the closed position into its open position whereas the second valve element (52) remains in its closed position, and when drive is imparted in the opposite drive direction, the second valve element (52) can be moved out of the closed position into its open position whereas the first valve element (12) remains in its closed position, wherein each valve element (12, 52) is designed as a flap (17, 57) which can be pivotally actuated by means of an associated shaft (18, 58), and the shafts (18, 58) are arranged so as to be rotationally actuable independently of one another by means of the common drive device (27) and so as to be rotatable at least substantially parallel to one another, and the drive device (27) has a drive gear (24, 64) for each valve element (12, 52) and the two drive gears (24, 64) are in meshing engagement with one another,
**characterized**
**in that** each valve element (12, 52) is designed as a flap cover (19, 59) which is for example approximately circular and which can be actuated about a laterally spaced-apart shaft axis by means of the respective shaft (18, 58) and via a transversely aligned lever (21, 61) which is connected to the shaft (18, 58), which flap cover (19, 59) bears, in the closed position, with an annular surface (60) against a valve seat surface (16, 56) on the housing, and in that the two drive gears (24, 64) are rotatable relative to the respective shaft (18, 58) and have in each case one driver (36, 66) fixed thereto, which driver, during a rotational movement of the respective drive gear (24, 64) in one rotational direction, can abut against a transversely aligned further lever (35, 65) connected to the associated shaft (18, 58) and, via said further lever (35, 65), can drive the shaft (18, 58) in said rotational direction, and which driver, during a rotational movement of the respective drive gear (24, 64) in the opposite direction, releases and does not act on the further lever (35, 65).

2. Exhaust-gas recirculation device according to Claim 1,
**characterized**
**in that** the housing (11) has one inlet opening (14) or two independent inlet openings (53, 73) for the exhaust gas and two outlet openings (15, 55) for the exhaust gas with respectively associated valve surfaces (16, 56), wherein the first valve element (12) is assigned to the first outlet opening (15) in order to control the latter and the second valve element (52) is assigned to the second outlet opening (55) in order to control the latter.

3. Exhaust-gas recirculation device according to either of Claims 1 and 2,
**characterized**
**in that** the shaft (18, 58) of each valve element (12, 52) is rotatably mounted in the housing (11) by means of bearings (54), for example needle-roller bearings, radial bearings or the like, and is sealed off with respect to the respective flow path (13, 53) of the exhaust gas.

4. Exhaust-gas recirculation device according to one of Claims 1 to 3,
**characterized**
**in that** each valve element (12, 52) can be moved out of its closed position into its open position counter to the exhaust gas which is conducted into the inlet opening (14), or oppositely directed exhaust gas.

5. Exhaust-gas recirculation device according to Claim 1,
**characterized**
**in that** the two drive wheels (24, 64) are arranged on one side of the housing (11) and adjacent to one another.

6. Exhaust-gas recirculation device according to one of Claims 1 to 5,
**characterized**
**in that** the drive device (27) has a drive output gear (32), for example a sprocket, which via an adjacent intermediate gear (33), preferably with a stepped gear (34), drives the second drive gear (64) for the second valve element (52), and in that the first drive gear (24) for the first valve element (12) is in engagement with the second drive gear (64) and is driven via the latter.

7. Exhaust-gas recirculation valve according to Claim 6,
**characterized**
**in that** the drive output gear (32), the intermediate gear (33), preferably with a stepped gear (34), and the two drive gears (24, 64) are formed as gearwheels, preferably as spur gears.

8. Exhaust-gas recirculation device according to one of Claims 1 to 7,
**characterized**
**in that** the drive device (27) has, for each drive gear (24, 64), a spring element (37, 67), for example a rotary spring, which at one side, for example with a spring end (38, 68), is fixed to the housing (11) and which at the other side, for example with a spring end (39, 69), is connected to the shaft (18, 58), for example engages on the further lever (35, 65) thereof, in such a way that, when the respective shaft (18, 58) with valve element (12, 52) is rotationally driven in the valve opening direction by means of the respective drive gear (24, 64), the spring element (37, 67) is placed under spring stress and, when the rotational drive is eliminated, the respective shaft (18, 58) with its valve element (12, 52) turns back into the valve closed position under the action of the relaxing spring.

9. Exhaust-gas recirculation device according to one of Claims 1 to 8,
**characterized**
**in that** at least one of the shafts (18, 58), in particular the drive gear (24, 64) assigned thereto, is assigned a rotational angle encoder (70).

10. Exhaust-gas recirculation device according to Claim 9,
**characterized**
**in that** the rotational angle encoder (70) is assigned to the final drive gear in the drive sequence, in particular to the first drive gear (24).

11. Exhaust-gas recirculation device according to Claim 9 or 10,
**characterized**
**in that** the rotational angle encoder (70) has an encoder element (71), for example a magnet, on the drive gear (24) and has a sensor (72) which is assigned to the encoder element (71) and which is connected to the housing (11).

12. Exhaust-gas recirculation device according to Claim 1,
**characterized**
**in that** the further lever (35, 65) of the respective shaft (18, 58) is assigned a stop (45, 75) which is fixed with respect to the housing and against which, in the rotational direction opposite to the drive rotational direction of the respective shaft (18, 58) in the valve opening direction, the further lever (35, 65) can abut, preferably under the action of a restoring spring, in the valve closed position, such that rotational angle limitation is provided.

13. Exhaust-gas recirculation device according to one of Claims 1 to 12,
**characterized**
**in that** the drive device (27), in particular the transmission gears which follow one another in the drive sequence, in the form of the intermediate gear (33), preferably with stepped gear (34) fixed thereto, the second drive gear (64) and the following first drive gear (24), are arranged on a common housing plate (25).

## Revendications

1. Dispositif de recirculation des gaz d'échappement comprenant une soupape double qui contient dans un boîtier (11) un premier élément de soupape (12) dans une voie d'écoulement (13) vers un refroidisseur de gaz d'échappement et un deuxième élément de soupape (52) dans une voie d'écoulement (53) sans refroidisseur de gaz d'échappement, et qui est pourvue d'un dispositif d'entraînement (27) commun aux deux éléments de soupape (12, 52) pour l'entraînement des éléments de soupape (12, 52), de telle sorte que lors de l'entraînement dans une direction d'entraînement, le premier élément de soupape (12) puisse être déplacé hors de la position de fermeture dans sa position d'ouverture, tandis que le deuxième élément de soupape (52) reste dans sa position de fermeture, et que lors de l'entraînement dans la direction d'entraînement opposée, le deuxième élément de soupape (52) puisse être déplacé de la position de fermeture dans sa position d'ouverture, tandis que le premier élément de soupape (12) reste dans sa position de fermeture, chaque élément de soupape (12, 52) étant réalisé sous forme de clapet (17, 57) pouvant être actionné par pivotement par le biais d'un arbre associé (18, 58), et les arbres (18, 58) pouvant être actionnés en rotation indépendamment l'un de l'autre au moyen du dispositif d'entraînement commun (27) et étant disposés à rotation au moins essentiellement parallèlement l'un à l'autre et le dispositif d'entraînement (27) présentant pour chaque élément de soupape (12, 52) une roue d'entraînement (24, 64) et les deux roues d'entraînement (24, 64) étant en prise l'une avec l'autre par transmission,
**caractérisé en ce que**
chaque élément de soupape (12, 52) est réalisé sous forme de couvercle rabattable (19, 59) par exemple approximativement de forme circulaire, pouvant être actionné autour d'un axe d'arbre espacé latéralement, au moyen de l'arbre respectif (18, 58) et par le biais d'un levier (21, 61) orienté transversalement connecté à l'arbre (18, 58), lequel couvercle rabattable s'applique, dans la position de fermeture, avec une surface annulaire (60) contre une surface de siège de soupape (16, 56) du côté du boîtier, et **en ce que** les deux roues d'entraînement (24, 64) peuvent tourner par rapport à l'arbre respectif (18, 58) et présentent à chaque fois un dispositif d'entraînement fixe (36, 66) sur celles-ci, qui, lors d'une révolution de la roue d'entraînement respective (24, 64) dans un sens de rotation, peut venir buter contre un levier supplémentaire (35, 65) orienté transversalement, connecté à l'arbre associé (18, 58), et, par le biais de ce levier supplémentaire (35, 65), peut entraîner l'arbre (18, 58) dans ce sens de rotation et, dans le cas d'une révolution de la roue d'entraînement respective (24, 64) dans le sens inverse, libère le levier supplémentaire (35, 65) et ne le sollicite pas.

2. Dispositif de recirculation des gaz d'échappement selon la revendication 1,
**caractérisé en ce que**
le boîtier (11) présente une ouverture d'entrée (14) ou deux ouvertures d'entrée (53, 73) indépendantes pour le gaz d'échappement et deux ouvertures de sortie (15, 55) pour le gaz d'échappement avec des surfaces de soupape respectivement associées (16, 56), le premier élément de soupape (12) étant associé à la première ouverture de sortie (15) et le deuxième élément de soupape (52) étant associé à la deuxième ouverture de sortie (55) pour la commande de celle-ci.

3. Dispositif de recirculation des gaz d'échappement selon l'une quelconque des revendications 1 ou 2,
**caractérisé en ce que**
l'arbre (18, 58) de chaque élément de soupape (12, 52) est monté à rotation dans le boîtier (11) au moyen de paliers (54), par exemple des paliers à aiguilles, des paliers radiaux ou similaires, et est étanché vis-à-vis de la course d'écoulement respective (13, 53) du gaz d'échappement.

4. Dispositif de recirculation des gaz d'échappement selon l'une quelconque des revendications 1 à 3,
**caractérisé en ce que**
chaque élément de soupape (12, 52) peut être déplacé de sa position de fermeture contre le gaz d'échappement introduit dans l'ouverture d'entrée (14) ou le gaz orienté dans le sens inverse, dans sa position d'ouverture.

5. Dispositif de recirculation des gaz d'échappement selon la revendication 1,
**caractérisé en ce que**
les deux roues d'entraînement (24, 64) sont disposées l'une à côté de l'autre et sur un côté du boîtier (11).

6. Dispositif de recirculation des gaz d'échappement selon l'une quelconque des revendications 1 à 5,
**caractérisé en ce que**
le dispositif d'entraînement (27) présente une roue de sortie (32), par exemple un pignon denté, qui entraîne, par le biais d'une roue intermédiaire adjacente (33), de préférence avec une roue étagée (34), la deuxième roue d'entraînement (64) pour le deuxième élément de soupape (52), et **en ce que** la première roue d'entraînement (24) pour le premier élément de soupape (12) est en prise avec la deuxième roue d'entraînement (64) et est entraînée par celle-ci.

7. Soupape de recirculation des gaz d'échappement selon la revendication 6,
**caractérisée en ce que**
la roue de sortie (32), la roue intermédiaire (33), de préférence avec la roue étagée (34), et les deux roues d'entraînement (24, 64), sont réalisées sous forme de roues dentées, de préférence sous forme de pignons dentés.

8. Dispositif de recirculation des gaz d'échappement selon l'une quelconque des revendications 1 à 7,
**caractérisé en ce que**
le dispositif d'entraînement (27) présente pour chaque roue d'entraînement (24, 64), un élément de ressort (37, 67), par exemple un ressort de torsion, qui est d'une part fixé au boîtier (11) par exemple avec une extrémité de ressort (38, 68), et qui est d'autre part connecté à l'arbre (18, 58), par exemple vient en prise sur son levier supplémentaire (35, 65), par exemple avec une extrémité de ressort (39, 69), de telle sorte que l'élément de ressort (37, 67), lors de l'entraînement en rotation de l'arbre respectif (18, 58) avec l'élément de soupape (12, 52) soit mis sous contrainte de ressort dans la direction d'ouverture de la soupape au moyen de la roue d'entraînement respective (24, 64), et en cas de panne de l'entraînement en rotation, l'arbre respectif (18, 58) avec son élément de soupape (12, 52) retourne dans la position de fermeture de la soupape par détente du ressort.

9. Dispositif de recirculation des gaz d'échappement selon l'une quelconque des revendications 1 à 8,
**caractérisé en ce**
**qu'**un détecteur d'angle de rotation (70) est associé à au moins l'un des arbres (18, 58), en particulier à la roue d'entraînement (24, 64) associée à celui-ci.

10. Dispositif de recirculation des gaz d'échappement selon la revendication 9,
**caractérisé en ce que**
le détecteur d'angle de rotation (70) est associé à la dernière roue d'entraînement dans la séquence d'entraînement, notamment la première roue d'entraînement (24).

11. Dispositif de recirculation des gaz d'échappement selon la revendication 9 ou 10,
**caractérisé en ce que**
le détecteur d'angle de rotation (70) présente un élément émetteur (71), par exemple un aimant, sur la roue d'entraînement (24), et un système de capteur (72) associé à l'élément émetteur (71), connecté au boîtier (11).

12. Dispositif de recirculation des gaz d'échappement selon la revendication 1,
**caractérisé en ce que**
qu'une butée (45, 75) fixée au boîtier est associée au levier supplémentaire (35, 65) de l'arbre respectif (18, 58), contre laquelle le levier supplémentaire (35, 65) peut buter dans la direction de rotation qui est opposée à la direction de rotation d'entraînement de l'arbre respectif (18, 58) dans la direction d'ouverture de la soupape, avec limitation de l'angle de rotation dans la position de fermeture de la soupape, de préférence sous l'action d'un ressort de rappel.

13. Dispositif de recirculation des gaz d'échappement selon l'une quelconque des revendications 1 à 12,
**caractérisé en ce que**
le dispositif d'entraînement (27), en particulier, les roues d'engrenage successives dans la séquence d'entraînement, sous la forme de la roue intermédiaire (33), de préférence avec la roue étagée (34) fixée à celle-ci, de la deuxième roue d'entraînement (64) et de la première roue d'entraînement suivante (24), sont disposées sur une plaque de boîtier commune (25).
